(19) Europäisches Patentamt / European Patent Office / Office européen des brevets

(11) **EP 3 260 377 B1**

(12) **EUROPEAN PATENT SPECIFICATION**

(45) Date of publication and mention
of the grant of the patent:
**04.03.2020 Bulletin 2020/10**

(21) Application number: **16772359.2**

(22) Date of filing: **18.03.2016**

(51) Int Cl.:
*B64F 5/00* (2017.01)   *B64C 1/00* (2006.01)
*B64C 1/12* (2006.01)   *B64D 45/02* (2006.01)
*F16B 5/02* (2006.01)   *B32B 7/08* (2019.01)
*F16B 1/00* (2006.01)

(86) International application number:
**PCT/JP2016/058625**

(87) International publication number:
**WO 2016/158476 (06.10.2016 Gazette 2016/40)**

(54) **STRUCTURAL BODY PRODUCTION DEVICE AND STRUCTURAL BODY PRODUCTION METHOD**

VORRICHTUNG ZUR HERSTELLUNG EINES STRUKTURKÖRPERS UND VERFAHREN ZUR HERSTELLUNG EINES STRUKTURKÖRPERS

DISPOSITIF DE PRODUCTION DE CORPS STRUCTUREL ET PROCÉDÉ DE PRODUCTION DE CORPS STRUCTUREL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2015 JP 2015073319**

(43) Date of publication of application:
**27.12.2017 Bulletin 2017/52**

(73) Proprietor: **Mitsubishi Heavy Industries, Ltd.**
**Tokyo 108-8215 (JP)**

(72) Inventors:
- **KAMIHARA, Nobuyuki**
  **Tokyo 108-8215 (JP)**
- **ABE, Toshio**
  **Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**JP-A- 2014 189 070    JP-A- 2014 503 166**
**JP-A- 2015 024 436    US-A- 4 897 143**
**US-A- 4 897 143**

- **Magna-Power Electronics ET AL: "OPERATING AND SERVICE MANUAL", , 20 February 2012 (2012-02-20), pages 1-31, XP055449280, Retrieved from the Internet: URL:http://www.magna-power.com/files/user% 20manual/mt/user%20manual_mt_6.0.pdf [retrieved on 2018-02-08]**

## Description

{Technical Field}

The present invention relates to a structure manufacturing device and a structure manufacturing method for manufacturing a structure including a first conductive member and a second conductive member each having conductivity.

{Background Art}

A lightweight and high-strength material with high durability has been required as an airframe material used for the main wing, the integral tank, and the like of an aircraft. For example, a lightweight metal material, such as an aluminum alloy, is used as an airframe material. In addition, with a recent increasing demand for these, a composite material composed of a resin material reinforced with carbon fibers has been used as an airframe material.

Metal (e.g., titanium alloy) fasteners have been used for joining airframe materials for main wings and the like to structure members for its reinforcement. If a contact resistance between a metal fastener and an airframe material is high, a stroke current flowing through the fastener due to a lightning strike may pass through the fastener without being adequately guided to the airframe material, and may be guided into the airframe, thereby causing a spark.

JP 2011-195114 A discloses a conductive cap that is mounted so as to cover a portion of a fastener penetrating through a structure member such that an electric field is not concentrated on the corners of the fastener, thereby suppressing sparks caused when current due to a lightning strike flows through the fastener.

A current application unit configured to apply current is known from XP055449280.

{Summary of Invention}

{Technical Problem}

However, according to JP 2011-195114 A, in which a conductive cap is mounted covering the portion of the fastener penetrating through the structure member, an increase in the weight due to addition of the cap is inevitable.

In addition, a substantial amount of work is needed for quality management for, for example, the cap thickness that ensures suppression of sparks.

It is an object of the present invention, which has been made in view of this background, to provide a structure manufacturing device and a structure manufacturing method for manufacturing a structure in which generation of sparks due to lightning strikes is suppressed without increasing the weight of the structure and work for quality management.

{Solution to Problem}

To solve the above-described problem, the present invention provides a structure manufacturing method as defined by claim 1 and a structure manufacturing device for use in the method as defined by claim 5.

A structure manufacturing device according to the present invention is a structure manufacturing device for use in the method according to the invention of manufacturing a structure including a first conductive member and a second conductive member each having conductivity, including: a current application unit configured to apply a current having a predetermined current value to a gap portion that is present between the first conductive member and the second conductive member and has a higher electrical resistance than the first conductive member and the second conductive member in order to decrease the electrical resistance of the gap portion.

In the structure manufacturing device according to the present invention, application of the current having the predetermined current value to the gap portion present between the first conductive member and the second conductive member of the structure decreases the electrical resistance of the gap portion. Thus, the structure is manufactured in which a stroke current flowing through the second conductive member due to a lightning strike is easily guided from the second conductive member to the first conductive member.

Therefore, the structure can be manufactured in which generation of sparks due to lightning strikes is suppressed without increasing the weight of the structure and work for quality management.

In the structure manufacturing device according to the present invention, the current application unit is configured to apply the current having the predetermined current value with a maximum value in the range of 0.1 kA to 50 kA.

Accordingly, the electrical resistance of the gap portion can be decreased while suppressing damage to the first conductive member and the second conductive member due to current applied to the gap portion.

In the structure manufacturing device with this configuration, the current application unit may be configured to apply the current having the predetermined current value with a maximum value in the range of 1 kA to 5 kA.

Accordingly, the electrical resistance of the gap portion can be decreased as appropriate while further suppressing damage to the first conductive member and the second conductive member due to current applied to the gap portion.

In the structure manufacturing device according to the present invention, the current application unit is configured to apply current such that the current application time from the initiation to termination of current application is in the range of 300 μs to 1 s.

Accordingly, the electrical resistance of the gap portion can be decreased while suppressing damage to the first conductive member and the second conductive member due to extended current application time.

A structure manufacturing method according to the present invention is a structure manufacturing method of manufacturing a structure including a first conductive member and a second conductive member each having conductivity, including: a current application step of applying a current having a predetermined current value to a gap portion that is present between the first conductive member and the second conductive member and has a higher electrical resistance than the first conductive member and the second conductive member in order to decrease the electrical resistance of the gap portion.

In the structure manufacturing method according to the present invention, application of the current having the predetermined current value to the gap portion present between the first conductive member and the second conductive member of the structure decreases the electrical resistance of the gap portion. Thus, the structure is manufactured in which a stroke current flowing through the second conductive member due to a lightning strike is easily guided from the second conductive member to the first conductive member.

Therefore, the structure can be manufactured in which generation of sparks due to lightning strikes is suppressed without increasing the weight of the structure and work for quality management.

In the structure manufacturing method according to a preferred embodiment of the present invention, the first conductive member may be composed of a metal or a composite material composed of a resin material reinforced with carbon fibers, and the current application unit may carbonize part of the resin material or melt part of the metal in order to decrease the electrical resistance of the gap portion.

With this configuration, part of the resin material contained in the composite material in the first conductive member is carbonized or part of the metal in the first conductive member is melted to decrease the electrical resistance of the gap portion, so that the structure can be manufactured in which generation of sparks due to lightning strikes is suppressed.

In the structure manufacturing method with this configuration, the second conductive member may preferably be a fastening member that is inserted in a fastening hole in the first conductive member and couples the first conductive member and another member with each other, and the gap portion may be a gap formed between the fastening hole and the fastening member.

Thus, part of the fastening hole formed in the first conductive member is melted or carbonized and the electrical resistance of the gap formed between the fastening hole and the fastening member can be reduced.

In the structure manufacturing method according to the present invention, the current application step applies the current having the predetermined current value with a maximum value in the range of 0.1 kA to 50 kA.

Accordingly, the electrical resistance of the gap portion can be decreased while suppressing damage to the first conductive member and the second conductive member due to current applied to the gap portion.

In the structure manufacturing method with this configuration, the current application step may preferably apply the current having the predetermined current value with a maximum value in the range of 1 kA to 5 kA.

Accordingly, the electrical resistance of the gap portion can be decreased as appropriate while further suppressing damage to the first conductive member and the second conductive member due to current applied to the gap portion.

In the structure manufacturing method according to the present invention, the current application unit applies the current such that the current application time from the initiation to termination of current application is in the range of 300 $\mu$s to 1 s.

Accordingly, the electrical resistance of the gap portion can be decreased while suppressing damage to the first conductive member and the second conductive member due to extended current application time.

{Advantageous Effects of Invention}

The present invention can provide a structure manufacturing device and a structure manufacturing method for manufacturing a structure in which generation of sparks due to lightning strikes is suppressed without increasing the weight of the structure and work for quality management.

{Brief Description of Drawings}

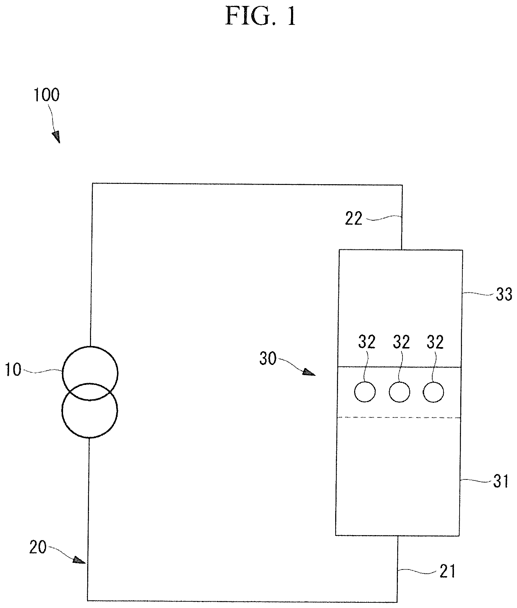

{Fig. 1} Fig. 1 is a schematic configuration view showing one embodiment of a structure manufacturing device.

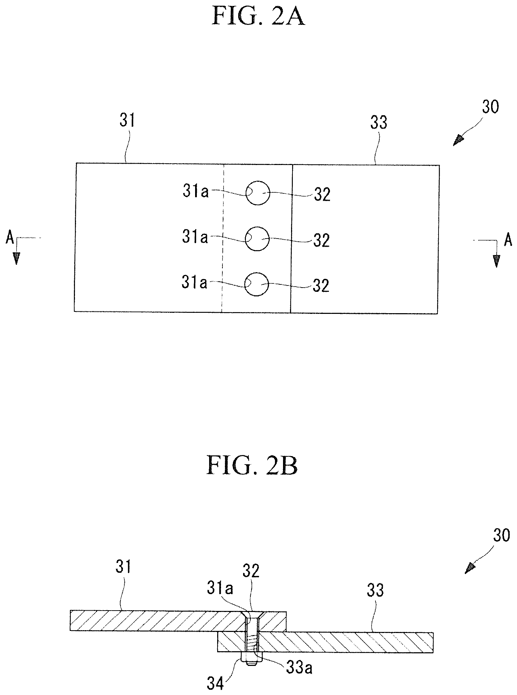

{Fig. 2A} Fig. 2A shows a plan view of the structure in Fig. 1.

{Fig. 2B} Fig. 2B shows a cross-sectional view of the structure in Fig. 1 along line A-A in Fig. 2A

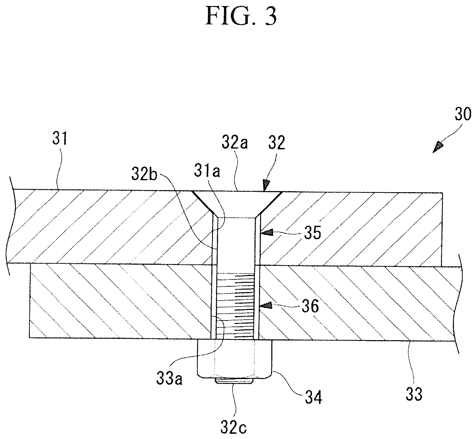

{Fig. 3} Fig. 3 is an enlarged view of the main part of Fig. 2B.

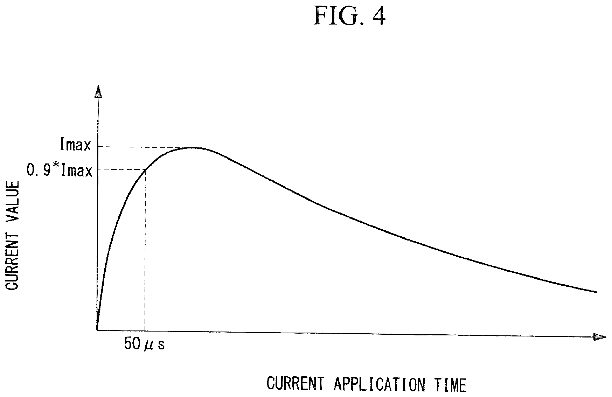

{Fig. 4} Fig. 4 is a graph showing the relationship between the current value that a constant-current power supply shown in Fig. 1 applies to a structure, and the application time.

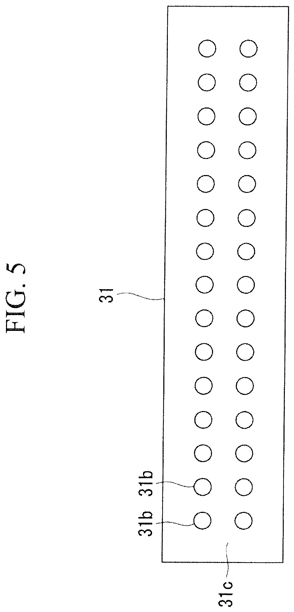

{Fig. 5} Fig. 5 is a diagram showing an end surface of a composite material.

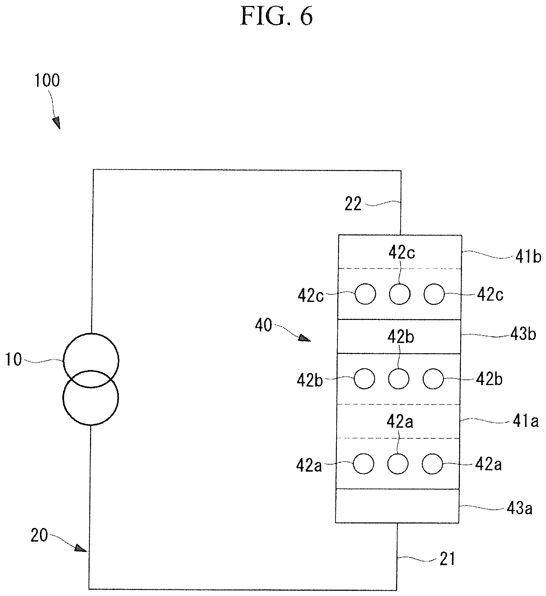

{Fig. 6} Fig. 6 is a schematic configuration view of a structure manufacturing device with a modified structure.

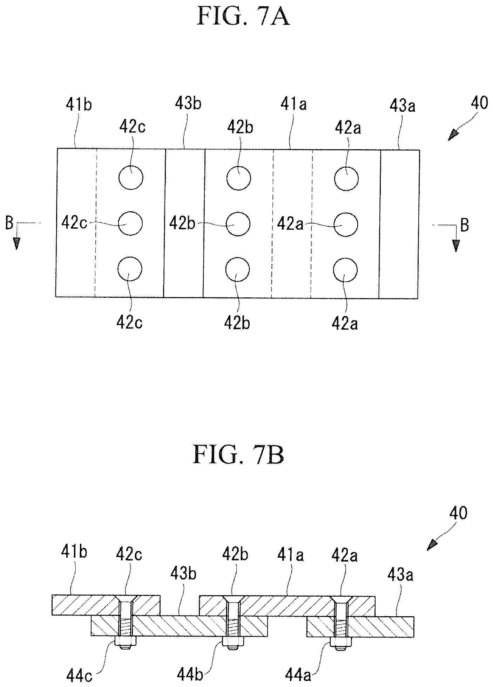

{Fig. 7A} Fig. 7A shows a plan view of the structure in Fig. 6.

{Fig. 7B} Fig. 7B shows a cross-sectional view of the structure in Fig. 6 along line B-B in Fig. 7A.

{Description of Embodiments}

A structure manufacturing device 100 according to one embodiment of the present invention will now be described with reference to the drawings.

As shown in Fig. 1, the structure manufacturing device 100 is a device for manufacturing a structure 30 by applying current to the structure 30 in which two plate-like composite materials, a composite material 31 (first conductive member), which is a resin material reinforced with carbon fibers, and a composite material 33 (another member) are coupled with each other with bolts 32 (second conductive members; fastening members) and nuts 34.

As shown in Fig. 1, the structure manufacturing device 100 includes a constant-current power supply 10 for applying a current having an arbitrary set current value, and a constant-current path 20 for electrically connecting the constant-current power supply 10 to the structure 30.

The constant-current path 20 includes a first constant-current path 21 for electrically connecting one terminal of the constant-current power supply 10 to one terminal of the structure 30, and a second constant-current path 22 for electrically connecting the other terminal of the constant-current power supply 10 and the other terminal of the structure 30.

The constant-current power supply 10 is a device providing control such that current having the waveform described below and shown in Fig. 4 is applied to the structure 30 through the constant-current path 20.

The composite materials 31 and 33 included in the structure 30 are a carbon fiber reinforced plastic (CFRP) which is a resin material reinforced with carbon fibers. The resin material may be, for example, a thermosetting resin, such as an unsaturated polyester or epoxy resin, or a thermoplastic resin, such as polyether ether ketone (PEEK).

The composite materials 31 and 33 have carbon fibers as a reinforcing material and therefore have conductivity sufficiently lower than that of metal. Alternatively, the structure may be formed by adding conductive particles or fibers to a resin material to increase the conductivity of the composite materials 31 and 33.

As shown in the plan view of Fig. 2A, the structure 30 includes the plate-like composite material 31, the plate-like composite material 33, and the bolt 32 that couples them with each other.

As shown in Fig. 2B which is a cross-sectional view along line A-A in Fig. 2A, the structure 30 is a structure in which the composite material 31 and the composite material 33 are coupled with each other with the bolts 32 inserted into fastening holes 31a in the composite material 31 and fastening holes 33a in the composite material 33 and fastened with the nuts 34.

The bolts 32 and the nuts 34 are conductive members formed of metal materials. The bolts 32 and the nuts 34, which are composed of metals, have higher conductivity than the composite materials 31 and 33.

The outer peripheral surface of the distal end portion of each bolt 32 is male-threaded, and the inner peripheral surface of each nut 34 is female-threaded. The bolt 32 is fastened with the nut 34 by fastening the male-thread in the distal end portion of the bolt 32 with the female-thread on the inner peripheral surface of the nut 34.

Fig. 3 is an enlarged view of the main portion of the structure 30 shown in Fig. 2B, in the state before application of current from the constant-current power supply 10 in the structure manufacturing device 100.

As shown in Fig. 3, a gap 35 (a gap portion) is formed between the inner peripheral surface of the fastening hole 31a formed in the composite material 31 and the outer peripheral surface 32b of the bolt 32. Similarly, a gap 36 (a gap portion) is formed between the inner peripheral surface of the fastening hole 33a formed in the composite material 33 and the outer peripheral surface 32b of the bolt 32.

The gap 35 is a portion that has a higher electrical resistance than the composite material 31 and the bolts 32. Similarly, the gap 36 is a portion that has a higher electrical resistance than the composite material 33 and the bolts 32.

The structure 30 is used, for example, as an integral tank which is a fuel tank integrated with the main wing of an aircraft and has a wing structure that is a sealed structure that does not leak a liquid fuel. In this case, a head 32a of the bolt 32 is exposed, forming a part of the skin of the main wing. Accordingly, the head 32a of the bolt 32 having higher conductivity than the composite material 31 tends to be struck by lightning.

When the head 32a of the bolt 32 is struck by lightning, a stroke current flows through the bolt 32. In this case, no sparks occur if a stroke current flows through the composite materials 31 and 33. However, if the electrical resistances of the gaps 35 and 36 are so high that stroke current does not flow through the composite materials 31 and 33, sparks occur at the distal end portion 32c of the bolt 32 and the corners of the nut 34.

Accordingly, in the structure manufacturing device 100 according to this embodiment, a current having a predetermined current value is applied to the gaps 35 and 36 to decrease the electrical resistances of the gaps 35 and 36 such that stroke current easily flows through the composite materials 31 and 33, thereby suppressing generation of sparks.

Here, the predetermined current value is a current value high enough to carbonize part of a resin material in the composite material 31 defining the gap 35 and part of a resin material in the composite material 33 defining the gap 36, thereby decreasing the electrical resistances of the gaps 35 and 36. In addition, this predetermined current value is a current value sufficiently lower than a current value assumed to be a stroke current due to a lightning strike, such that the composite materials 31 and 33 are not broken down by the current application.

Fig. 4 is a graph showing the relationship between the current value that the constant-current power supply 10 shown in Fig. 1 applies to the structure 30, and the application time.

In Fig. 4, the horizontal axis indicates the application time lapsed from the initiation of current application across the structure 30 by the constant-current power supply 10 through the constant-current path 20, and the vertical axis indicates the value of the current applied by the constant-current power supply 10 at each application time.

As for the waveform of the current shown in Fig. 4, the maximum current is Imax, and the current at 50 $\mu$s after the initiation of current application is 0.9·Imax.

Here, the Imax value set by the constant-current power supply 10 satisfies the following equation (1).

$$0.1kA \leq Imax \leq 50kA \quad (1)$$

In addition, it is more preferable that the Imax value set by the constant-current power supply 10 satisfy the following equation (2).

$$1kA \leq Imax \leq 5kA \quad (2)$$

As for the waveform of the current shown in Fig. 4, the application time T from the initiation of current application by the constant-current power supply 10 to the termination of the current application preferably satisfies the following equation (3). Here, s indicates second.

$$300 \ \mu s \leq T \leq 1s \quad (3)$$

Further, it is more preferable that the application time T be set to about 500 $\mu$s.

A method of manufacturing the structure 30 with the use of the structure manufacturing device 100 according to this embodiment is implemented through the following steps.

First, the composite material 31 and the composite material 33 are coupled with each other through the bolts 32 and the nuts 34, thereby forming the structure 30.

Second, a terminal of the composite material 31 corresponding to one terminal of the structure 30 is connected to the first constant-current path 21, and a terminal of the composite material 33 corresponding to the other terminal of the structure 30 is connected to the second constant-current path 22.

Third, the constant-current power supply 10 applies a current having the waveform shown in Fig. 4 and applies a current having a predetermined current value to the gaps 35 and 36 (current application step). Application of the current having the predetermined current value to the gaps 35 and 36 carbonizes part of a resin material in the composite material 31 defining the gap 35 and part of a resin material in the composite material 33 defining the gap 36, thereby decreasing the electrical resistances of the gaps 35 and 36.

Through these steps, the structure 30 in which the electrical resistances of the gaps 35 and 36 are reduced is manufactured.

As shown in Fig. 5, carbon fibers 31b are exposed on an end surface, corresponding to a cut surface made by cutting, of the composite material 31 composed of a resin material reinforced with the carbon fibers 31b. Multiple carbon fibers 31b exposed on the end surface in this manner are separated from each other without a contact. Accordingly, if a stroke current flows through the composite material 31, discharge in a gap (a gap portion) defined between the adjacent carbon fibers 31b may cause a phenomenon (edge glow phenomenon) in which sparks occur.

In a method of manufacturing the structure 30 with the use of the aforementioned structure manufacturing device 100, a current having the waveform shown in Fig. 4 is applied from the constant-current power supply 10 to the structure 30. Accordingly, part of a resin layer 31c between the adjacent carbon fibers 31b exposed on the end surface of the composite material 31 is carbonized, and the carbonized part of the resin layer 31c increases the conductivity of the adjacent carbon fibers 31b and decreases the electrical resistance of the gap between the adjacent carbon fibers 31b. Therefore, in the event of a lightning strike, a phenomenon (edge glow phenomenon) in which sparks occur due to discharge is suppressed on the end surface of the structure 30.

In the above description, the structure in which current is applied from the constant-current power supply 10 of the structure manufacturing device 100 is made by coupling the composite material 31 and the composite material 33 with each other through the bolts 32, but the structure may have another form.

For example, as in the modifications shown in Figs. 6 and 7A, a structure 40 is applicable in which a composite material 43a and a composite material 43b are coupled with both ends of the composite material 41a and a composite material 41b is coupled with the end of the composite material 43b.

As shown in Fig. 7B, in the modified structure 40, the composite material 41a and the composite material 43a are coupled with each other through a bolt 42a inserted into a fastening hole at one end of the composite material 41a and fastened with a nut 44a. In addition, in the modified structure 40, the composite material 41a and a composite material 43b are coupled with each other through a bolt 42b inserted into a fastening hole at the other end of the composite material 41a and fastened with a nut 44b. In addition, in the modified structure 40, the composite material 41b and the composite material 43b are coupled with each other through a bolt 42c inserted into a fastening hole at one end of the composite material 41b and fastened with a nut 44c.

As shown in Fig. 6, the first constant-current path 21 of the structure manufacturing device 100 is connected to an end of the composite material 43a, which is an end of the structure 40, and the second constant-current path 22 of the structure manufacturing device 100 is connected to an end of the composite material 41b, which is an end of the structure 40.

In the structure manufacturing device 100, the constant-current power supply 10 applies a current having a predetermined current value to the structure 40 through the constant-current path 20, thereby decreasing the electrical resistances of a joint where the bolt 42a for the composite material 41a is inserted, a joint where the bolt 42b for the composite material 41a is inserted, and a joint where the bolt 42c for the composite material 41b is inserted.

In this case, it is not necessary to provide separate constant-current paths to the joint where the bolt 42a for the composite material 41a is inserted, the joint where the bolt 42b for the composite material 41a is inserted, and the joint where the bolt 42c for the composite material 41b is inserted, respectively. Accordingly, the electrical resistances in the joint positions in the structure 40 including multiple joints can be easily decreased using a relatively simple constant-current path 20.

The actions and effects provided by the structure manufacturing device 100 according to this embodiment will be described.

In the structure manufacturing device 100 according to this embodiment, a current having a predetermined current value is applied to the gap 35 (gap portion) present between the composite material 31 (the first conductive member) of the structure 30 and the bolt 32 (the second conductive member), so that the electrical resistance of the gap 35 decreases. Similarly, the current having the predetermined current value is applied to the gap 35 (gap portion) present between the composite material 33 of the structure 30 and the bolt 32, so that the electrical resistance of the gap 35 decreases. Thus, the structure 30 is manufactured in which a stroke current flowing through the bolt 32 due to a lightning strike is easily guided from the bolt 32 to the composite material 31 and the composite material 33.

Therefore, the structure 30 can be manufactured in which generation of sparks due to lightning strikes is suppressed without increasing the weight of the structure and work for quality management.

In the structure manufacturing device 100 according to this embodiment, the composite material 31 and the composite material 33 are a material composed of a resin material reinforced with carbon fibers. In addition, the constant-current power supply 10 is configured to partially carbonize the resin materials in the composite materials 31 and 33 to decrease the electrical resistances of the gaps 35 and 36.

Thus, parts of the resin materials contained in the composite materials 31 and 33 are carbonized to decrease the electrical resistances of the gaps 35 and 36, so that the structure 30 can be manufactured in which generation of sparks due to lightning strikes is suppressed.

In addition, in the structure manufacturing device 100 according to this embodiment, the bolt 32 is a fastening member that is inserted into the fastening hole 31a in the composite material 31 so that the composite material 31 and the composite material 33 (another member) can be coupled with each other. Further, the gap 35 is formed between the fastening hole 31a and the bolt 32.

Thus, part of the fastening hole 31a formed in the composite material 31 is carbonized and the electrical resistance of the gap 35 formed between the fastening hole 31a and the bolt 32 can be reduced.

In the structure manufacturing device 100 according to this embodiment, the constant-current power supply 10 applies a current with the maximum value in the range of 0.1 kA to 50 kA. It is more preferable that the maximum value of the applied current be in the range of 1 kA to 5kA.

Accordingly, the electrical resistance of the gap 35 can be decreased while suppressing damage to the composite material 31 and the bolt 32 due to current applied to the gap 35.

In the structure manufacturing device 100 according to this embodiment, the constant-current power supply 10 applies current such that the current application time T from the initiation to termination of current application is in the range of 300 $\mu$s to 1 s.

Accordingly, the current application time T is increased, so that the electrical resistance of the gap 35 can be decreased while suppressing damage to the composite material 31 and the bolt 32.

{Other Embodiments}

In the above description, the composite material 31 and the composite material 33 into which the metal bolt 32 is inserted are carbon fiber reinforced plastics composed of resin materials reinforced with carbon fibers, which is not necessarily the case. For example, a metal such as an aluminum alloy (not shown in the drawing) may be used instead of a carbon fiber reinforced plastic.

Although a metal has higher conductivity than a carbon fiber reinforced plastic, a metal may have sufficiently lower conductivity than the bolt 32 when the surface of the metal is oxidized. In this case, as with the aforementioned composite material 31 and composite material 33, the head 32a of the bolt 32 tends to be struck by lightning.

When the head 32a of the bolt 32 is struck by lightning, a stroke current flows through the bolt 32. In this case, if the stroke current flows through the metal, no sparks occur. However, if the electrical resistances of the gaps 35 and 36 are so high that the stroke current does not flow through the metal, sparks occur at the distal end portion 32c of the bolt 32 and the corners of the nut 34.

Accordingly, in the structure manufacturing device according to the other embodiment, a current having a predetermined current value is applied to the gaps 35 and 36 to decrease the electrical resistances of the gaps 35 and 36 such that the stroke current easily flows through the metals, thereby suppressing generation of sparks.

Here, a predetermined current value is a current value high enough to melt part of the metal defining the gap 35 and part of the metal defining the gap 36, thereby decreasing the electrical resistances of the gaps 35 and 36. In addition, this predetermined current value is a current value sufficiently lower than a current value assumed to be a stroke current due to a lightning strike, such that the metals are not broken down by the current application.

{Reference Signs List}

| 10 | constant-current power supply (current application unit) |
| 20 | constant-current path |
| 21 | first constant-current path |
| 22 | second constant-current path |
| 30 | structure |
| 31 | composite material (first conductive member) |
| 31a | fastening hole |
| 31b | carbon fiber |
| 31c | resin layer |
| 32 | bolt (second conductive member; fastening member) |
| 32a | head |
| 32b | outer peripheral surface |
| 32c | distal end portion |
| 33 | composite material (another member) |
| 33a | fastening hole |
| 34 | nut |
| 35, 36 | gap (gap portion) |
| 40 | structure |
| 41a, 41b | composite material (first conductive member) |
| 42a, 42b, 42c | bolt |
| 43a, 43b | composite material |
| 100 | structure manufacturing device |

**Claims**

1. A structure manufacturing method of manufacturing a structure (30;40) including a first conductive member (31,33;41a,41b,43a,43b) and a second conductive member (32;42a-c) each having conductivity, comprising:

a current application step of applying a current having a predetermined current value to a gap portion (35,36) that is present between the first conductive member (31,33;41a,41b,43a,43b) and the second conductive member (32;42a-c) and has a higher electrical resistance than the first conductive member (31,33;41a,41b,43a,43b) and the second conductive member (32;42a-c) in order to decrease the electrical resistance of the gap portion (35,36),

**characterized in that**
the current application step applies the current having the predetermined current value with a maximum value Imax in the range of 0.1 kA ≤ Imax ≤ 50 kA, and applies the current such that the current application time T from the initiation to termination of current application is in the range of 300 μs ≤ T ≤ 1 s.

2. The structure manufacturing method according to Claim 1, wherein
the first conductive member (31,33;41a,41b,43a,43b) is composed of a metal or a composite material composed of a resin material reinforced with carbon fibers, and
the current application step carbonizes part of the resin material or melts part of the metal in order to decrease the electrical resistance of the gap portion (35,36).

3. The structure manufacturing method according to Claim 1 or 2, wherein
the second conductive member (32;42a-c) is a fastening member that is inserted in a fastening hole (33a) in the first conductive member (31,33;41a,41b,43a,43b) and couples the first conductive member (31,33;41a,41b,43a,43b) and another member (33;43a,43b) with each other, and
the gap portion (35,36) is a gap formed between the fastening hole (33a) and the fastening member (32).

4. The structure manufacturing method according to Claim 1, 2 or 3, wherein the current application step applies the current having the predetermined current value with the maximum value Imax in the range of 1 kA ≤ Imax ≤ 5 kA.

5. A structure manufacturing device (100) for use in a structure manufacturing method of manufacturing a structure (30;40) including a first conductive member (31,33;41a,41b,43a,43b) and a second conductive member (32;42a-c) each having conductivity according to claim 1, 2, 3 or 4, comprising:

a current application unit (10) configured to apply a current having a predetermined current value to a gap portion (35;36) that is present between the first conductive member (31,33;41a,41b,43a,43b) and the second conductive member (32;42a-c) and has a higher electrical resistance than the first conductive member (31,33;41a,41b,43a,43b) and the second conductive member (32;42a-c) in order to decrease the electrical resistance of the gap portion (35,36),
wherein the current application unit (10) is configured to apply the current having the predetermined current value with the maximum value Imax in the range of 0.1 kA $\leq$ Imax $\leq$ 50 kA, and is configured to apply current such that the current application time T from the initiation to termination of current application is in the range of 300 $\mu$s $\leq$ T $\leq$ 1 s, **characterized in that**
the current application unit (10) is configured to apply the current having the predetermined current value such that the current at 50 $\mu$s after the initiation of current application is 0.9*Imax.

**6.** The structure manufacturing device (100) according to Claim 5, wherein the current application unit (10) is configured to apply the current having the predetermined current value with the maximum value Imax in the range of 1 kA $\leq$ Imax $\leq$ 5 kA.


**Patentansprüche**

**1.** Ein Strukturherstellungsverfahren zum Herstellen einer Struktur (30/40), die ein erstes leitfähiges Element (31,33;41a,41b,43a,43b) und ein zweites leitfähiges Element (32;42a-c) besitzt, die jeweils Leitfähigkeit haben, mit:

einem Stromanwendungsschritt des Anwendens eines Stroms mit einem vorbestimmten Stromwert auf einen Zwischenraumabschnitt (35,36), der zwischen dem ersten leitfähigen Element (31,33;41a,41b,43a,43b) und dem zweiten leitfähigen Element (32;42a-c) vorhanden ist und der einen höheren elektrischen Widerstand besitzt als das erste leitfähige Element (31,33;41a,41b,43a,43b) und das zweite leitfähige Element (32;42a-c), um den elektrischen Widerstand des Zwischenraumabschnitts (35,36) zu verringern,
**dadurch gekennzeichnet, dass**
der Stromanwendungsschritt den Strom mit dem vorbestimmten Stromwert mit einem Maximalwert Imax in dem Bereich von 0,1 kA $\leq$ Imax $\leq$ 50 kA anwendet, und den Strom so anwendet, dass die Stromanwendungszeit T von dem Beginn zu der Beendigung der Stromanwendung in dem Bereich von 300 $\mu$s $\leq$ T $\leq$ 1 s ist.

**2.** Das Strukturherstellungsverfahren gemäß Anspruch 1, wobei
das erste leitfähige Element (31,33;41a,41b,43a,43b) aus einem Metall oder einem Kompositmaterial aufgebaut aus einem mit Kohlefasern verstärkten Kunstharzmaterial aufgebaut ist, und
der Stromanwendungsschritt einen Teil des Harzmaterials karbonisiert oder einen Teil des Metalls schmilzt, um den elektrischen Widerstand des Zwischenraumabschnitts (35,36) zu verringern.

**3.** Das Strukturherstellungsverfahren gemäß Anspruch 1 oder 2, wobei
das zweite leitfähige Element (32;42a-c) ein Befestigungselement ist, das in ein Befestigungsloch (33a) in dem ersten leitfähigen Element (31,33;41a,41b,43a,43b) eingesetzt ist und das das erste leitfähige Element (31,33;41a,41b,43a,43b) und ein weiteres Element (33;43a,43b) miteinander koppelt, und
der Zwischenraumabschnitt (35,36) ein Zwischenraum ist, der zwischen dem Befestigungsloch (33a) und dem Befestigungselement (32) ausgebildet ist.

**4.** Das Strukturherstellungsverfahren gemäß Anspruch 1, 2 oder 3, wobei der Stromanwendungsschritt den Strom mit dem vorbestimmten Stromwert mit dem Maximalwert Imax in dem Bereich von 1 kA $\leq$ Imax $\leq$ 5 kA anwendet.

**5.** Eine Strukturherstellungsvorrichtung (100) zur Verwendung in einem Strukturherstellungsverfahren zum Herstellen einer Struktur (30/40) die ein erstes leitfähiges Element (31,33;41a,41b,43a,43b) und ein zweites leitfähiges Element (32;42a-c) besitzt, die jeweils Leitfähigkeit haben, gemäß Anspruch 1, 2, 3 oder 4, mit:

einer Stromanwendungseinheit (10), die konfiguriert ist, um einen Strom mit einem vorbestimmten Stromwert auf einen Zwischenraumabschnitt (35;36) anzuwenden, der zwischen dem ersten leitfähigen Element (31,33;41a,41b,43a,43b) und dem zweiten leitfähigen Element (32;42a-c) vorhanden ist und der einen höheren elektrischen Widerstand besitzt als das erste leitfähige Element (31,33;41a,41b,43a,43b) und das zweite leitfähige Element (32;42a-c), um den elektrischen Widerstand des Zwischenraumabschnitts (35,36) zu verringern,
wobei die Stromanwendungseinheit (10) konfiguriert ist, um den Strom mit dem vorbestimmten Stromwert mit dem Maximalwert Imax in dem Bereich von 0,1 kA $\leq$ Imax $\leq$ 50 kA anzuwenden, und sie konfiguriert ist, um den Strom so anzuwenden, dass die Stromanwendungszeit T von dem Beginn zu der Beendigung der Stromanwendung in dem Bereich von 300 $\mu$s $\leq$ T $\leq$ 1 s ist, **dadurch gekennzeichnet, dass**

die Stromanwendungseinheit (10) konfiguriert ist, um den Strom mit dem vorbestimmten Stromwert so anzuwenden, dass der Strom bei 50 $\mu$s nach dem Beginn der Stromanwendung 0,9* Imax beträgt.

**6.** Die Strukturherstellungsvorrichtung (100) gemäß Anspruch 5, wobei die Stromanwendungseinheit (10) konfiguriert ist, um den Strom mit dem vorbestimmten Stromwert mit dem Maximalwert Imax in dem Bereich von 1 kA $\leq$ Imax $\leq$ 5 kA anzuwenden.

**Revendications**

**1.** Procédé de fabrication d'une structure, dans lequel on fabrique une structure (30 ; 40), comprenant un premier élément (31, 33 ; 41a, 41b, 43a, 43b) conducteur et un deuxième élément (32 ; 42a-c) conducteur, ayant chacun de la conductivité, comprenant :

un stade d'application d'un courant, dans lequel on applique un courant d'une valeur déterminée à l'avance à une partie (35, 36) d'intervalle, présente entre le premier élément (31, 33 ; 41a, 41b, 43a, 43b) conducteur et le deuxième élément (32 ; 42a-c) conducteur, et qui a une résistance électrique plus grande que le premier élément (31, 33 ; 41a, 41b, 43a, 43b) conducteur et que le deuxième élément (32 ; 42a-c) conducteur, afin de diminuer la résistance électrique de la partie (35, 36) d'intervalle, **caractérisé en ce que**

le stade d'application d'un courant applique le courant ayant la valeur déterminée à l'avance avec une valeur Imax maximum dans la plage de 0,1 kA $\leq$ Imax $\leq$ 50 kA, et applique le courant de manière à ce que le temps T d'application du courant, du début à la fin de l'application du courant, soit dans la plage de 300 $\mu$s $\leq$ T $\leq$ 1 s.

**2.** Procédé de fabrication d'une structure suivant la revendication 1, dans lequel

le premier élément (31, 33 ; 41a, 41b, 43a, 43b) conducteur est composé d'un métal ou d'un matériau composite composé d'un matériau de résine, renforcé par des fibres de carbone, et

le stade d'application d'un courant carbonise une partie du matériau de résine ou fait fondre une partie du métal, afin de diminuer la résistance électrique de la partie (35, 36) d'intervalle.

**3.** Procédé de fabrication d'une structure suivant la revendication 1 ou 2, dans lequel

le deuxième élément (32 ; 42a-c) conducteur est un élément de fixation inséré dans un trou (33a) de fixation dans le premier élément (31, 33 ; 41a, 41b, 43a, 43b) conducteur et relie le premier élément (31, 33 ; 41a, 41b, 43a, 43b) conducteur et un autre élément (33 ; 43a, 43b) l'un à l'autre, et

la partie (35, 36) d'intervalle est un intervalle formé entre le trou (33a) de fixation et l'élément (32) de fixation.

**4.** Procédé de fabrication d'une structure suivant la revendication 1, 2 ou 3, dans lequel le stade d'application d'un courant applique le courant ayant la valeur déterminée à l'avance avec la valeur Imax maximum dans la plage de 1 kA $\leq$ Imax $\leq$ 5 kA.

**5.** Dispositif (100) de fabrication d'une structure à utiliser dans un procédé de fabrication d'une structure, dans lequel on fabrique une structure (30 ; 40), comprenant un premier élément (31, 33 ; 41a, 41b, 43a, 43b) conducteur et un deuxième élément (32 ; 42a-c) conducteur, ayant chacun de la conductivité suivant la revendication 1, 2, 3 ou 4, comprenant :

une unité (10) d'application d'un courant, configurée pour appliquer un courant ayant une valeur déterminée à l'avance à une partie (35, 36) d'intervalle, présente entre le premier élément (31, 33 ; 41a, 41b, 43a, 43b) conducteur et le deuxième élément (32 ; 42a-c) conducteur et ayant une résistance électrique plus grande que le premier élément (31, 33 ; 41a, 41b, 43a, 43b) conducteur et que le deuxième élément (32 ; 42a-c) conducteur, afin de diminuer la résistance électrique de la partie (35, 36) d'intervalle, dans lequel l'unité (10) d'application d'un courant est configurée pour appliquer le courant ayant la valeur déterminée à l'avance avec une valeur Imax maximum dans la plage de 0,1 kA $\leq$ Imax $\leq$ 50 kA, et applique le courant de manière à ce que le temps T d'application du courant, du début à la fin de l'application du courant, soit dans la plage de 300 us $\leq$ T $\leq$ 1 s,

**caractérisé en ce que**

l'unité (10) d'application d'un courant est configurée pour appliquer le courant ayant la valeur déterminée à l'avance, de manière à ce que le courant soit, à 50 $\mu$s après le début de l'application du courant, de 0,9*Imax.

**6.** Dispositif (100) de fabrication d'une structure suivant la revendication 5, dans lequel l'unité (10) d'application d'un courant est configurée pour appliquer le courant ayant la valeur déterminée à l'avance avec la valeur Imax maximum dans la plage de 1 kA $\leq$ Imax $\leq$ 5 kA.

FIG. 1

## FIG. 2A

31                 33        30

31a — 32

A

31a — 32       A

31a — 32

## FIG. 2B

30

31    32             33

31a

33a

34

FIG. 3

## FIG. 4

CURRENT APPLICATION TIME

CURRENT VALUE

Imax

0.9*Imax

50 μs

EP 3 260 377 B1

# FIG. 5

FIG. 6

## FIG. 7A

## FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011195114 A